(19) Europäisches Patentamt / European Patent Office / Office européen des brevets

(11) **EP 2 578 707 A1**

(12) **EUROPEAN PATENT APPLICATION**
published in accordance with Art. 153(4) EPC

(43) Date of publication:
**10.04.2013 Bulletin 2013/15**

(21) Application number: **11789423.8**

(22) Date of filing: **27.05.2011**

(51) Int Cl.:
**C22C 9/05** (2006.01)     **C22C 9/01** (2006.01)
**C22F 1/08** (2006.01)     **E04B 1/58** (2006.01)
**E04B 2/02** (2006.01)     **E04C 5/02** (2006.01)
**E04C 5/08** (2006.01)     **E04C 5/12** (2006.01)
**C22F 1/00** (2006.01)

(86) International application number:
**PCT/JP2011/002966**

(87) International publication number:
**WO 2011/152009 (08.12.2011 Gazette 2011/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2010 JP 2010124899**

(71) Applicant: **Japan Copper Development Association**
**Tokyo 110-0005 (JP)**

(72) Inventors:
• **ARAKI, Yoshikazu**
  **Kyoto-shi, Kyoto 615-8540 (JP)**
• **OMORI, Toshihiro**
  **Sendai-shi, Miyagi 980-8577 (JP)**
• **SUTOU, Yuji**
  **Sendai-shi, Miyagi 980-8577 (JP)**

• **KOETAKA, Yuji**
  **Kyoto-shi, Kyoto 615-8540 (JP)**
• **IKAGO, Kohju**
  **Sendai-shi, Miyagi 980-8577 (JP)**
• **KAINUMA, Ryosuke**
  **Sendai-shi, Miyagi 980-8577 (JP)**
• **ISHIDA, Kiyohito**
  **Sendai-shi, Miyagi 980-8577 (JP)**
• **KUSAMA, Tomoe**
  **Sendai-shi, Miyagi 980-8577 (JP)**

(74) Representative: **Pitchford, James Edward et al**
**Mathys & Squire LLP**
**120 Holborn**
**London**
**EC1N 2SQ (GB)**

(54) **COPPER-BASED ALLOY AND STRUCTURAL MATERIAL COMPRISING SAME**

(57)     A copper-based alloy which contains 7.8 to 8.8 mass% of Al, 7.2 to 14.3 mass% of Mn and a remainder made up by Cu and unavoidable impurities, has a largest crystal grain diameter of more than 8 mm, has good shape memory properties, and enables the production of a structural material having a cross-section size suitable for use as a structure body or the like; and a structural material comprising the copper-based alloy. The copper-based alloy may additionally contain at least one element selected from the group consisting of Ni, Co, Fe, Ti, V, Cr, Si, Ge, Nb, Mo, W, Sn, Bi, Sb, Mg, P, Be, Zr, Zn, B, C, S, Ag and a misch metal in the total amount of 0.001 to 5 mass%.

EP 2 578 707 A1

## Description

Technical Field

The present invention relates to a copper-based alloy having shape-memory properties and a structural material including the copper-based alloy.

Background Art

Measures against inland earthquakes such as Southern Kanto earthquake and subduction zone earthquakes such as Nankai, Tonankai and Tokai earthquakes, which are expected to occur in the near future, are urgent issues. Among these, the safeness of structures is an important problem, and further improvement of the seismic adequacy of structures and the continuous usability of structures after an earthquake is socially required.

Therefore, for Example, Non-Patent Literature 1 introduces several approaches to utilize an Ni-Ti shape-memory alloy in the response control of structures in civil engineering and construction. In a shape-memory alloy, non-linear distortion that is generated by deformation that goes beyond an elastic area remains as in general metals, but the shape-memory alloy has a property called as a shape-memory effect and thus can remove the residual distortion by heating. Furthermore, in the case of a shape-memory alloy, it also has a property called as a superelasticity by which residual distortion is eliminated only by conducting unloading at a temperature region at a certain temperature or more. In the present specification, the superelastic property and shape-memory effect are collectively referred to as "shape-memory properties".

Since an element which uses a shape-memory alloy having a superelastic property does not cause residual deformation against a large earthquake, or causes quite little residual deformation, the element has an advantage that it is unnecessary to replace the element or to eliminate residual deformation by heating after a large earthquake. However, the Ni-Ti shape-memory alloy has a problem that, in the case when it is applied to a structural material for civil engineering and construction, the cost is extremely high since the raw materials are expensive, and the alloy has poor cold workability and thus is difficult to be cut.

Therefore, in recent years, copper-based shape-memory alloys that are advantageous in cost performance have been gaining attentions. For Example, Patent Literature 1 discloses a process for the production of a Cu-Al-Mn-based shape-memory alloy having excellent processability including 5 to 20 mass% of Mn and 3 to 10 mass% of Al, and a remainder made up by Cu and unavoidable impurities. Furthermore, Patent Literature 2 discloses a damping element to which high cut processability is imparted by adding S to a Cu-Al-Mn-based shape-memory alloy.

Citation List

Patent Literatures

Patent Literature 1: JP 3335224 B
Patent Literature 2: JP 2009-52097 A
Patent Literature 3: JP 3300684 B

Non-Patent Literature

Non-Patent Literature 1: Song G, Ma N and Li H-N, "Applications of shape memory alloys in civil structures", Engineering Structures, 2006, Vol. 28, pp. 1266-1274

Summary of the Invention

Problem to be solved by the Invention

It is known that, in the case of a Cu-Al-Mn-based shape-memory alloy, the shape-memory properties are improved more as the crystal particle size against the material (element) size becomes coarse, and it is considered that it is possible to coarsen the crystal particle size against the material size in a material (element) having a small cross-sectional surface area. A general polycrystalline metal material has a crystal particle size of from about several micrometers to several hundred micrometers; for example, in Patent Literature 3, a Cu-Al-Mn-based shape-memory alloy having a crystal particle size of about 1.5 mm was realized in a wire having a wire diameter of about 0.36 mm and a board material having a width of 10 mm x a thickness of 0.2 mm.

However, since structural materials having a relatively large cross-sectional surface size are used in structures in civil engineering and construction, the elements realized in Patent Literature 3 have a problem that they have a too small cross-sectional surface size and thus cannot be applied to structures in civil engineering and construction. Furthermore, coarser crystal particles are required in order to obtain shape-memory properties at relatively large cross-sectional surface sizes used in structures in civil engineering and construction, but such coarse crystal particles have not been realized by conventional techniques.

The present invention was made in view of such circumstance, and aims at providing a copper-based alloy that can attain a structural material having shape-memory properties and a cross-sectional surface size that can be applied to a structure and the like, and a structural material using the copper-based alloy.

Solution to Problem

In order to attain the above-mentioned object, in the present invention, a structural material that has shape-memory properties and a cross-sectional surface size that can be applied to various structures, large-sized machines, automatic vehicles, aircraft, marine vessels and the like is attained by increasing the crystal particle size of a Cu-Al-Mn-based shape-memory alloy.

A Cu-Al-Mn-based shape-memory alloy has a $\beta$-phase (bcc structure) at a high temperature, and can be converted to a 2-phase tissue of $\beta+\alpha$-phases by the precipitation of an $\alpha$-phase (fcc structure) at a low temperature by selecting suitable components. It is considered that a composition that gives a $\beta$-phase at a high temperature and $\beta+\alpha$-phases at a low temperature is important for coarsening of crystal particles. In addition, when an $\alpha$-phase is present at a high temperature region, the growth of crystal particles is pinned and thereby the crystal particles become fine.

In the present invention, a copper-based alloy including 7.8 to 8.8 mass% of Al and 7.2 to 14.3 mass% of Mn, and a remainder made up by Cu and unavoidable impurities has a maximum crystal particle size of more than 8 mm.

Furthermore, the copper-based alloy according to the present invention may further contain at least one kind of element (s) selected from the group consisting of Ni, Co, Fe, Ti, V, Cr, Si, Ge, Nb, Mo, W, Sn, Bi, Sb, Mg, P, Be, Zr, Zn, B, C, S, Ag and a misch metal by 0.001 to 5 mass% in total.

Furthermore, the present invention includes the following structural materials that constitute a structure.

(1) A concrete element having a main reinforcement including the copper-based alloy.
(2) A prestressed concrete element having a PC tendon including the copper-based alloy.
(3) A reinforcing material formed of the copper-based alloy, which is configured to be disposed inside of a masonry wall.

(4) A splice plate formed of the copper-based alloy for use in joining elements.
(5) A joint bolt formed of the copper-based alloy for use in joining elements.
(6) An anchor bolt formed of the copper-based alloy, which is configured to be buried in a concrete base.

(7) A brace that is configured to be disposed in a structure plane of a structure, which is formed of the copper-based alloy.
(8) An angle brace that is configured to support a beam, which is formed of the copper-based alloy.

Advantageous Effects of Invention

In the present invention, since the maximum crystal particle size is adjusted to more than 8 mm in the copper-based alloy containing 7.8 to 8.8 mass% of Al and 7.2 to 14.3 mass% of Mn, and a remainder made up by Cu and unavoidable impurities, a structural material having shape-memory properties and a cross-sectional surface size that can be applied to a structure and the like can be attained.

Brief Description of Drawings

Fig. 1 is a cross-sectional view of a concrete element using the copper-based alloy according to an embodiment of the present invention.

Fig. 2 is a schematic view of a column beam joint part of a steel frame structure.

Fig. 3 is a schematic view of a base part of a steel frame structure.

Fig. 4 is (A) a schematic view of a brace using the copper-based alloy according to an embodiment of the present invention, and (B) a schematic view of an angle brace using the copper-based alloy according to an embodiment of the present invention.

Fig. 5 is the stereomicroscopic photograph of Example 4.

Fig. 6 is the optical microscopic photograph of Comparative Example 5.

Fig. 7 is the stereomicroscopic photograph of Example 29.

Fig. 8 is the graph of stress-distortion curve of Example 30.

Fig. 9 is the graph of stress-distortion curve of Example 31.

Fig. 10 is the graph showing the equivalent damping rates at respective repeating numbers of Examples 30 and 31.

Description of Embodiments

In order to understand the present invention, the present invention will be explained below based on the embodiments of the present invention, with reference to the attached drawings.

The copper-based alloy according to an embodiment of the present invention contains 7.8 to 8.8 mass% of Al and 7.2 to 14.3 mass% of Mn, and a remainder made up by Cu and unavoidable impurities, and has a maximum crystal particle size of more than 8 mm.

Furthermore, the copper-based alloy according to the present embodiment may further contain one kind or two or more kinds of element (s) selected from the group consisting of Ni, Co, Fe, Ti, V, Cr, Si, Ge, Nb, Mo, W, Sn, Bi, Sb, Mg, P, Be, Zr, Zn, B, C, S, Ag and a misch metal by 0.001 to 5 mass% in total, besides the elements in the above-mentioned basic composition.

In the following explanations, a copper-based alloy composed of the above-mentioned components is sometimes referred to as a "Cu-Al-Mn-based shape-memory alloy."

In the case when the Cu-Al-Mn-based shape-memory alloy has a maximum crystal particle size of 8 mm or less, restoration of the residual distortion after unloading is insufficient, and thus shape-memory properties cannot be obtained. On the other hand, although finer shape-memory properties can be obtained when the Cu-Al-Mn-based shape-memory alloy has a larger maximum crystal particle size, the maximum value of the crystal particle size is about 150 mm at present due to the problems in production.

[Process for measurement of crystal particle size]

Using an optical microscope for a sample of fine crystal particles or a stereomicroscope for a sample of coarse crystal particles, an image of the sample is taken, and a line is drawn in the sample longitudinal direction of the obtained image. Furthermore, the lengths of the line segments that are cutting across the respective crystal particles are measured, and the maximum value thereof is defined as the maximum crystal particle size of the sample.

[Composition of Cu-Al-Mn-based shape-memory alloy]

Al is an element that stabilizes a $\beta$-phase, and suppresses the precipitation of an $\alpha$-phase at a low temperature. Therefore, if the content of Al increases, crystal particles become difficult to be coarsened. Therefore, in the present embodiment, the upper limit of the content of Al is set to be low as 8.8 mass%. On the other hand, if the content of Al element is lower than 7.8 mass%, a $\beta$-single phase cannot be formed at a high temperature region. A more preferable content of Al element is 8.0 to 8.5 mass%, but the content differs depending on the content of Mn element.

By containing Mn element, a composition range in which a $\beta$-phase may exist is broaden to the low Al side, thereby the cold workability of the Cu-Al-Mn-based shape-memory alloy is significantly improved. If the content of Mn element is lower than 7.2 mass%, sufficient cold workability cannot be obtained, and a $\beta$-single phase cannot be formed at a high temperature region. Furthermore, when the content of Mn element is more than 14.3 mass%, sufficient shape-memory properties cannot be obtained. A preferable content of Mn is 9.7 to 12.7 mass%, and by adjusting Mn amount in this range, a martensitic transformation temperature can be adjusted.

Ni, Co, Fe, Sn and Sb are effective elements for reinforcing a matrix tissue. Preferable contents of each of Ni and Fe are 0.001 to 3 mass%. Co also effects precipitation reinforcement by forming CoAl, but when Co is excessive, the toughness of the alloy is decreased. A preferable content of Co is 0.001 to 2 mass%. Preferable contents of each of Sn and Sb are 0.001 to 1 mass%.

Ti binds to N and O, which are elements that inhibit alloy properties, to form an oxide and a nitride. Furthermore, when it is added together with B, Ti forms a boride that contributes to precipitation reinforcement. A preferable content of Ti is 0.001 to 2 mass%.

W, V, Nb, Mo and Zr have an effect to improve hardness to thereby improve wear resistance. Furthermore, since these elements are hardly dissolved in an alloy matrix, they precipitate as a bcc crystal and are effective for reinforcement of precipitation. Preferable contents of each of W, V, Nb, Mo and Zr are 0.001 to 1 mass%.

Cr is an effective element for maintaining wear resistance and corrosion resistance. A preferable content of Cr is 0.001 to 2 mass%.

Si has an effect to improve corrosion resistance. A preferable content of Si is 0.001 to 2 mass%.

Mg is effective for improving hot workability and toughness by removing N and O that are elements that inhibit alloy properties and fixing S that is an inhibitory element as a sulfide, but leads to particle boundary segregation and causes embrittlement when it is added by a large amount. A preferable content of Mg is 0.001 to 0.5 mass%.

P acts as a deoxidizing agent and has an effect to improve toughness. A preferable content of P is 0.01 to 0.5 mass%.

Be has an effect to reinforce a matrix tissue. A preferable content of Be is 0.001 to 1 mass%.

Zn has an effect to raise a martensitic transformation temperature. A preferable content of Zn is 0.001 to 5 mass%.

B and C segregate in a particle boundary and have an effect of reinforcing the particle boundary. Preferable contents of each of B and C are 0.001 to 0.5 mass%.

For S, by adding S to a Cu-Al-Mn-based shape-memory alloy, a trace amount of a sulfide such as MnS is formed inside of the material, thereby excellent cut processability is expressed. A preferable content of S is 0.001 to 0.3 mass%.

Ge has an effect to raise a martensitic transformation temperature. A preferable content of Ge is 0.001 to 1 mass%.

Bi is an effective element for improving cut processability. A preferable content of Bi is 0.001 to 1 mass%.

Ag has an effect to improve cold workability. A preferable content of Ag is 0.001 to 2 mass%.

The misch metal acts as a deoxidizing agent and has an effect to improve toughness. A preferable content of the misch metal is 0.001 to 5 mass%.

[Process for producing Cu-Al-Mn-based shape-memory alloy]

An outline of the process for producing a Cu-Al-Mn-based shape-memory alloy having a maximum crystal particle size of more than 8 mm will be shown below.

(1) A Cu-Al-Mn-based shape-memory alloy including the above-mentioned components is melted in a melting furnace such as a high-frequency melting furnace and casted into a mold to prepare an ingot.

(2) The above-mentioned ingot is mold-processed into a predetermined shape by hot forging or hot rolling (600 to 900°C) and cold rolling or wire drawing.

(3) The Cu-Al-Mn-based shape-memory alloy formed into a predetermined shape is heat-treated in a range of 400 to 950°C. In the heat treatment, the alloy is retained at from a β-single phase region temperature to a 2-phase region temperature of β+α and an α-phase is precipitated during cooling, thereafter a heat treatment is conducted again at a β-single phase region temperature. It is preferable that this heat treatment is conducted once or twice or more. In general, the β-single phase region temperature is 700 to 950°C, and the 2-phase region temperature of β+α is 400 to 850°C.

(4) The Cu-Al-Mn-based shape-memory alloy that has been heat-treated in the β-single phase region is put into water to effect quenching.

(5) The Cu-Al-Mn-based shape-memory alloy that has been cooled in water is subjected to an aging treatment at a temperature of 50 to 300°C for 1 to 300 minutes.

By conducting the heat treatments of (3) and (4) on the Cu-Al-Mn-based shape-memory alloy, the crystal particles are coarsened, thereby the superelastic property and shape-memory effect of the Cu-Al-Mn-based shape-memory alloy can be improved. Furthermore, although the martensitic transformation temperature sometimes varies when the Cu-Al-Mn-based shape-memory alloy is left at room temperature after water-cooling from the β-single phase region temperature, the martensitic transformation temperature can be stabilized by conducting the aging treatment of (5), thereby stable shape-memory properties can be expressed.

[Example of application of Cu-Al-Mn-based shape-memory alloy to structural material]

Several examples of structural materials for structures in civil engineering and construction to which the Cu-Al-Mn-based shape-memory alloy having a maximum crystal particle size of more than 8 mm can be applied will be shown below.

(1) Concrete element

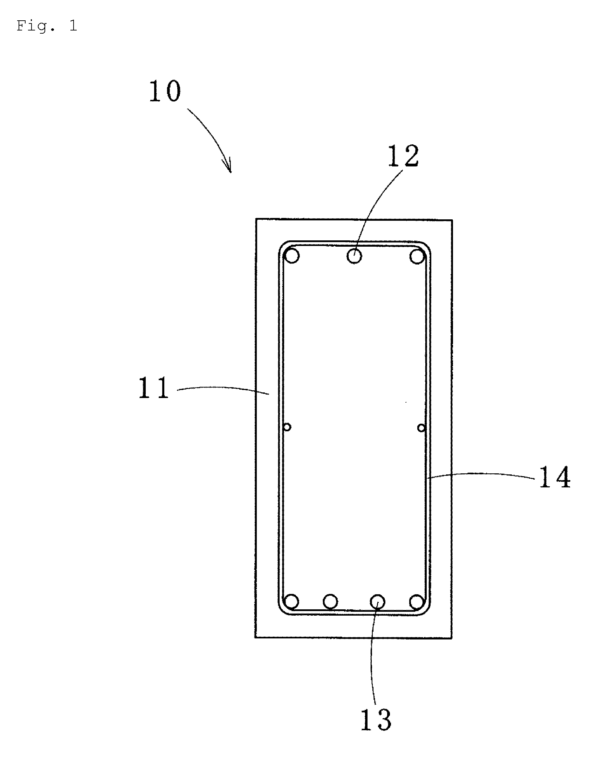

The cross-sectional surface of a beam 10 that is an example of a concrete element is shown in Fig. 1. The beam 10 includes a top reinforcement 12 and a bottom reinforcement 13, and a stirrup 14 that is wound at a predetermined pitch around the top reinforcement 12 and bottom reinforcement 13, in a concrete 11 having a rectangular cross-sectional surface, and the top reinforcement 12 and bottom reinforcement 13 that are main reinforcements are formed of the Cu-Al-Mn-based shape-memory alloy according to the present embodiment.

Instead of using the present Cu-Al-Mn-based shape-memory alloy over the full length of the main reinforcements, the present Cu-Al-Mn-based shape-memory alloy may be used on only a part of the main reinforcements such as a beam end part at which bending moment is high. In such case, a reinforcing steel and the present Cu-Al-Mn-based shape-memory alloy may be joined by a mechanical joint such as a long nut and a coupler.
Furthermore, the present Cu-Al-Mn-based shape-memory alloy may be used as a material for a PC tendon in a prestressed concrete element.

Alternatively, the present Cu-Al-Mn-based shape-memory alloy may be used as a reinforcing material to be disposed inside a masonry wall formed by laying bricks, stones, concrete blocks or the like. As used herein, the "inside a masonry wall" includes not only the case when the reinforcing material is disposed along a masonry joint, but also the case when the reinforcing material is disposed orthogonally to a masonry joint and the case when the reinforcing material is disposed at an angle toward a masonry joint.

(2) Splice plate

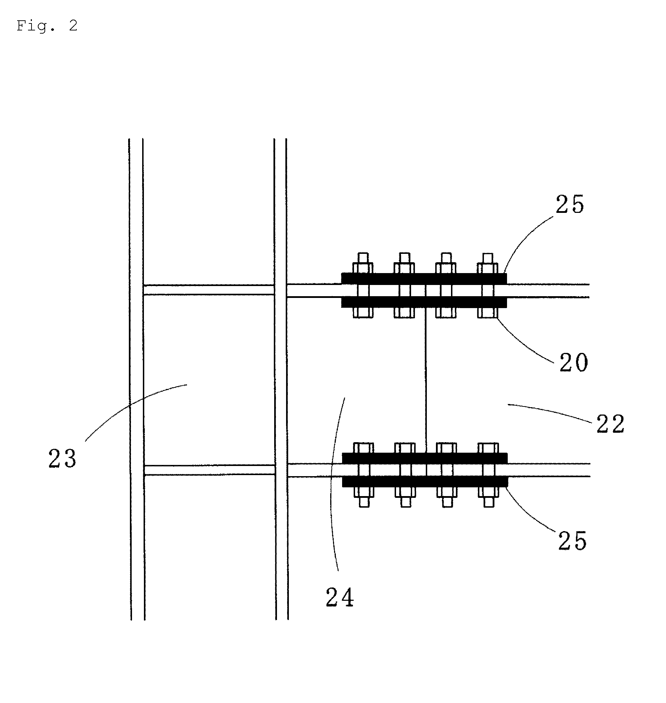

Fig. 2 shows a column beam joint part having a steel frame structure. In this steel frame structure, a bracket 24 formed of an H-shaped steel which is projecting laterally from a steel frame column 23 and a steel frame beam 22 formed of an H-shaped steel are joined through splice plates 25 formed of the present Cu-Al-Mn-based shape-memory alloy. The respective flanges of the steel frame beam 22 and bracket 24 are interposed between splice plates 25 and friction-joined with high strength bolts 20 (joint bolts) that penetrate these splice plates.
The high strength bolts 20 may be formed by the present Cu-Al-Mn-based shape-memory alloy.

(3) Anchor bolt

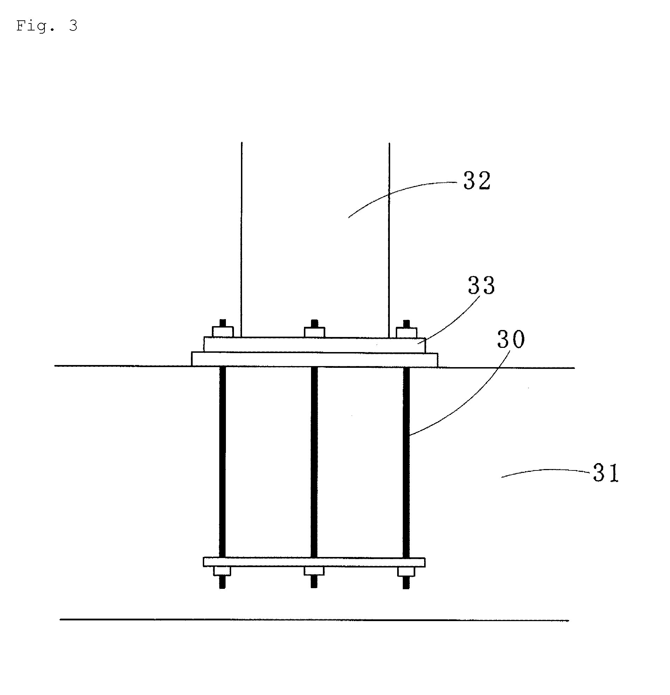

Fig. 3 shows a base part of a steel frame structure, in which a steel frame column 32 is disposed vertically on a concrete base 31. A base plate 33 disposed on the bottom end surface of the steel frame column 32 and the concrete base 31 are joined by anchor bolts 30 that are exposed from the concrete base 31, and the anchor bolts 30 are formed of the present Cu-Al-Mn-based shape-memory alloy.

(4) Brace

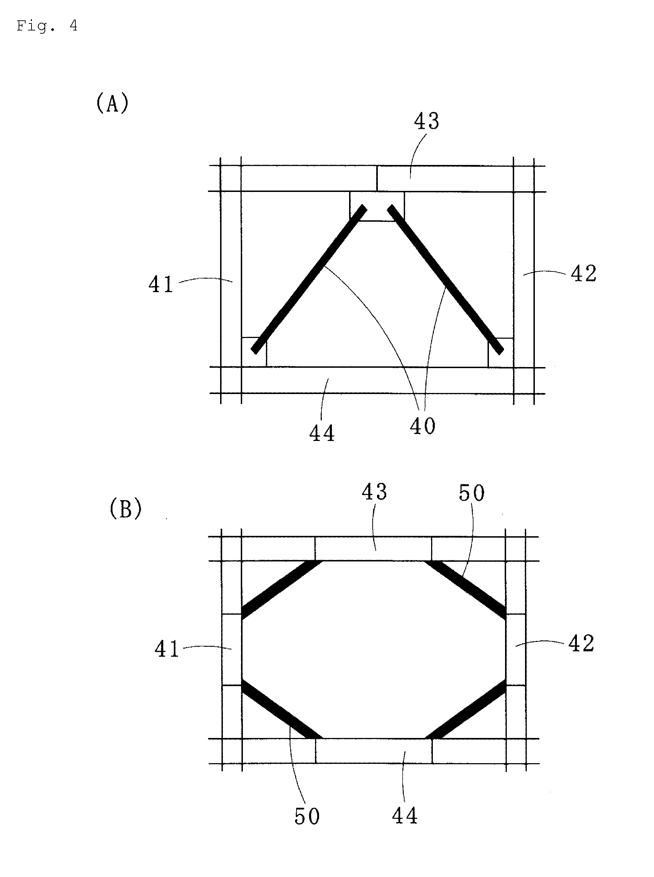

Fig. 4 (A) shows braces 40 that are installed in a structure plane defined by columns 41 and 42, and an upper beam 43 and a lower beam 44 that are erected between the columns 41 and 42. A pair of braces 40 is formed of the present Cu-Al-Mn-based shape-memory alloy, and one end parts of the braces 40 are joined to the center part of the upper beam 43 and the other end parts are joined to the end parts of the lower beam 44 to constitute a K-shaped brace. In addition, the present Cu-Al-Mn-based shape-memory alloy may be used as a core material for a buckling-restrained brace, or a part of a turnbuckle in a tensile brace.

(5) Angle brace

Fig. 4 (B) shows angle braces 50 that are installed in a structure plane having the same constitution as mentioned above. The angle braces 50 are formed of the present Cu-Al-Mn-based shape-memory alloy, and the angle braces 50 that support the upper beam 43 are installed on a corner part formed by the upper beam 43 and column 41 and on a corner part formed by the upper beam 43 and column 42, and the angle braces 50 that support the lower beam 44 are installed on a corner part formed by the lower beam 44 and column 41 and on a corner part formed by the lower beam 44 and column 42, respectively.

The embodiments of the present invention have been explained above, but the present invention is not limited at all to the constitutions described in the above-mentioned embodiments, and also encompasses other embodiments and modified Examples that are considered within the range of the matter described in the claims. For Example, although a beam has been explained as a concrete element in the above-mentioned embodiments, it is needless to say that the present Cu-Al-Mn-based shape-memory alloy can be applied to columns, walls and the like. Furthermore, although the braces installed in the structure plane form a K-shaped brace in the above-mentioned embodiments, it is needless to say that other manners of installation such as an X-shaped brace may be used. Furthermore, although examples in which the present Cu-Al-Mn-based shape-memory alloy was utilized as a structural material in a structure in civil engineering and construction have been explained in the above-mentioned embodiments, the alloy can also be utilized as a structural material in other structures, large-sized machines, automatic vehicles, aircraft, marine vessels and the like.

Examples

[Test 1]

A Cu-Al-Mn-based shape-memory alloy having the components shown in Table 1 was melted in a high-frequency melting furnace and casted in a mold to prepare an ingot. The ingot is then hot-rolled at 800°C to a thickness of 2 mm, thereafter subjected to a heat treatment at 600°C for 15 minutes and cold rolling to give a board material having a thickness of 1 mm. A sample having a width of 5 mm and a length of 25 to 30 mm was cut out from the board material, heat treatments at 900°C for 1 hour, at 500°C for 5 minutes and at 900°C for 1 hour were conducted on the sample, thereafter the sample was put into water to effect quenching, and an aging treatment at 200°C for 15 minutes was further conducted.

All of Examples 1 to 9 have a maximum crystal particle size of 8 mm or more and form huge crystal particle tissues. On the other hand, since Comparative Example 1 and Comparative Example 2 contained a small amount of Al, the crystal particles were not sufficiently coarsened, and since Comparative Example 3 contained a small amount of Mn, the crystal particles were not sufficiently coarsened. Furthermore, Comparative Example 4, Comparative Example 5 and Comparative Example 6 contained large amount of Mn, Al and Al, respectively, and thus the crystal particles were not sufficiently coarsened. Specifically in Comparative Example 1 and Comparative Example 3 among Comparative Examples, since an $\alpha$-phase was precipitated to form a 2-phase of $\beta+\alpha$ at a high temperature region due to small amounts of Al and Mn, respectively, the growth of the crystal particles was inhibited.

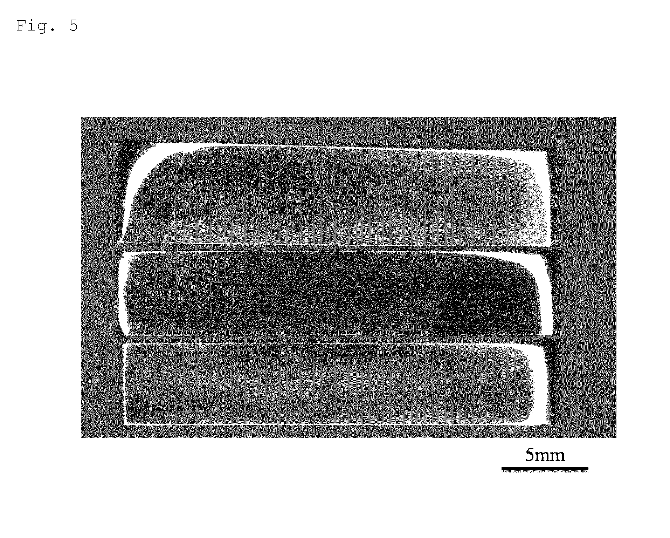

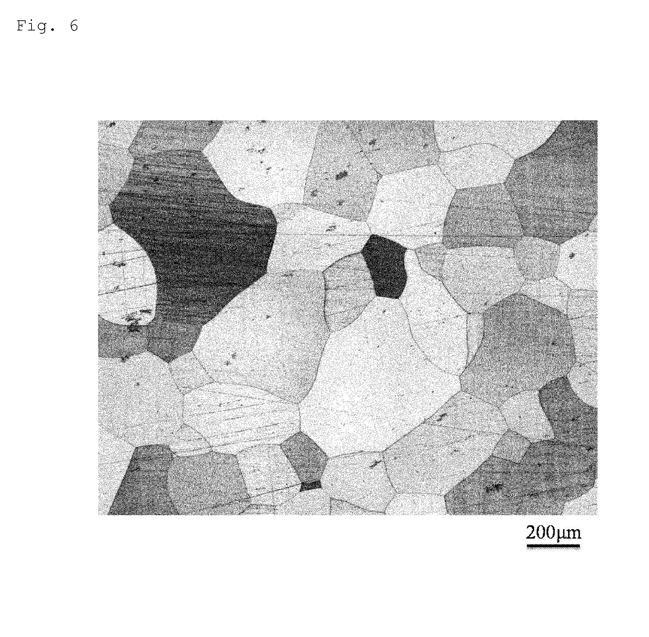

Fig. 5 shows the stereomicroscopic photograph of Example 4, and Fig. 6 shows the optical microscopic photograph of Comparative Example 5. Fig. 5 shows a result obtained when three same alloy samples were prepared and the above-mentioned treatment was conducted, and the samples have extremely huge crystal particle tissues. On the other hand, Comparative Example 5 that contains a large amount of Al has a crystal particle size of around 300 $\mu$m that is within the range of the crystal particle size of a general metal material.

Next, in order to examine the shape restoration property (shape-memory property) of the Cu-Al-Mn-based shape-memory alloy, the sample was wound around a circle rod having a diameter of 20 mm, and the curvature radius R of the sample after unloading was measured. The shape restoration properties of Examples 2 and 6 that are samples in a shape-memory effect mode were evaluated by the curvature radius R when heating was conducted up to 200°C after unloading. Here, a sample in a shape-memory effect mode refers to a sample that has a property to restore its original shape when it is heated. The shape restoration property of the sample was evaluated by a shape recovery rate shown in the following formula, and a shape recovery rate of 80% or more and 100% or less was evaluated as A, a shape recovery rate f 50% or more and lower than 80% was evaluated as B, and a shape recovery rate of lower than 50% was evaluated as C.

$$\text{Shape recovery rate (\%) = (R - 10)/R} \times 100$$

As a result, it was found that the samples of Examples 1 to 9 having huge crystal particles show a very fine shape-memory property. On the other hand, the shape recovery rate was lower in Comparative Examples 1 to 6 than that in Examples 1 to 9. The shape recovery rate was low especially in Comparative Example 1 and Comparative Example 3 due to that the $\alpha$-phase was precipitated to form the 2-phase of $\beta+\alpha$ at a high temperature. Furthermore, the ductility was low and thus crack was generated by applying bending deformation in Comparative Example 5 and Comparative

Example 6.

[Table 1]

| Sample | Al (mass%) | Mn (mass%) | Maximum Crystal Particle Size(mm) | Shape Recovery rate |
|---|---|---|---|---|
| Example 1 | 7.9 | 11.2 | 13 | A |
| Example 2 | 8.1 | 9.7 | 21 | A |
| Example 3 | 8.1 | 10.7 | 20 | A |
| Example 4 | 8.1 | 11.1 | 25 | A |
| Example 5 | 8.1 | 11.7 | 9 | A |
| Example 6 | 8.2 | 9.5 | 10 | A |
| Example 7 | 8.2 | 12.7 | 16 | A |
| Example 8 | 8.4 | 10.8 | 12 | A |
| Example 9 | 8.7 | 11.2 | 11. 5 | A |
| Comparative Example 1 | 7.1 | 11.0 | 0.69 | C |
| Comparative Example 2 | 7.6 | 11.0 | 2 | B |
| Comparative Example 3 | 8.1 | 6.8 | 0.1 | C |
| Comparative Example 4 | 8.7 | 14.8 | 1 | C |
| Comparative Example 5 | 9.0 | 12.8 | 0.62 | C |
| Comparative Example 6 | 9.7 | 9.4 | 2.5 | C |

※ A reminder is made up by Cu and unavoidable impurities.

[Test 2]

Cu-Al-Mn-based shape-memory alloys having the components shown in Table 2 were prepared, and the tissues after the heat treatment were observed and the shape restoration properties were evaluated. The processes for the production of the samples were similar to that in Examples 1 to 9, except that the solution treatment temperature in Example 27 was 950°C. The shape restoration properties of Examples 17, 22, 26 and 27 that are samples in a shape-memory effect mode were evaluated by the curvature radius R when heating was conducted up to 200°C after unloading.
In any of the Cu-Al-Mn-based shape-memory alloys of Examples 10 to 28 to which additional elements were added, the crystal particles were sufficiently coarsened. Furthermore, it could be confirmed that the shape recovery rates by the superelastic property or shape-memory effect were also fine.
[Table 2]

| Sample | Al (mass%) | Mn (mass%) | Other Elements (mass%) | Maximum Crystal Particle Size(mm) | Shape Recovery Rate |
|---|---|---|---|---|---|
| Examples 10 | 8.1 | 10.4 | Ni :3.1 | 29.5 | A |
| Example 11 | 8.1 | 11.1 | Co:0.2 | 26 | A |
| Example 12 | 8.1 | 11.1 | Co:0.5 | 17.5 | A |
| Example 13 | 8.1 | 10.7 | Fe:0.1 | 18 | A |
| Example 14 | 8.1 | 10.7 | Ti :0.1 | 12 | A |
| Example 15 | 8.1 | 10.7 | V : 0.05 | 12 | A |
| Example 16 | 8.1 | 10.7 | Cr:0.05 | 10 | A |
| Example 17 | 8.1 | 9.7 | Si:0.1 | 15 | A |
| Example 18 | 8.1 | 10.7 | Mo:0.2 | 11 | A |

(continued)

| Sample | Al (mass%) | Mn (mass%) | Other Elements (mass%) | Maximum Crystal Particle Size(mm) | Shape Recovery Rate |
|---|---|---|---|---|---|
| Example 19 | 8.1 | 10.7 | W:0.3 | 10 | A |
| Example 20 | 8.1 | 10.7 | Mg:0.04 | 19 | A |
| Example 21 | 8.1 | 10.7 | P:0.005 | 9 | A |
| Example 22 | 8.1 | 9.7 | B:0.04 | 16 | A |
| Example 23 | 8.1 | 10.7 | C:0.002 | 19 | A |
| Example 24 | 8.1 | 10.7 | S:0.006 | 18 | A |
| Example 25 | 8.0 | 10.5 | Ag:1.9 | 21 | A |
| Example 26 | 8.0 | 9.1 | Ni:1.0, B:0.04 | 20 | A |
| Example 27 | 8.2 | 7.6 | Ni:2.1, Si:0.05 | 15 | A |
| Example 28 | 8. 1 | 10.7 | Co:0.1, B:0.02 | 24 | A |

※ ⸴A reminder is made up by Cu and unavoidable impurities.

[Test 3]

For a Cu-Al-Mn-based shape-memory alloy including 8.1 mass% of Al and 11.1 mass% of Mn, a rod material having a diameter of 20 mm was formed by high-frequency melting and hot forging.

Furthermore, a cycle at 900°C for 15 minutes and at 600°C for 30 minutes was conducted twice, and a heat treatment at 900°C for 15 minutes was finally conducted, and the material was cooled in water and further subjected to an aging treatment at 200°C for 15 minutes to give Example 29.

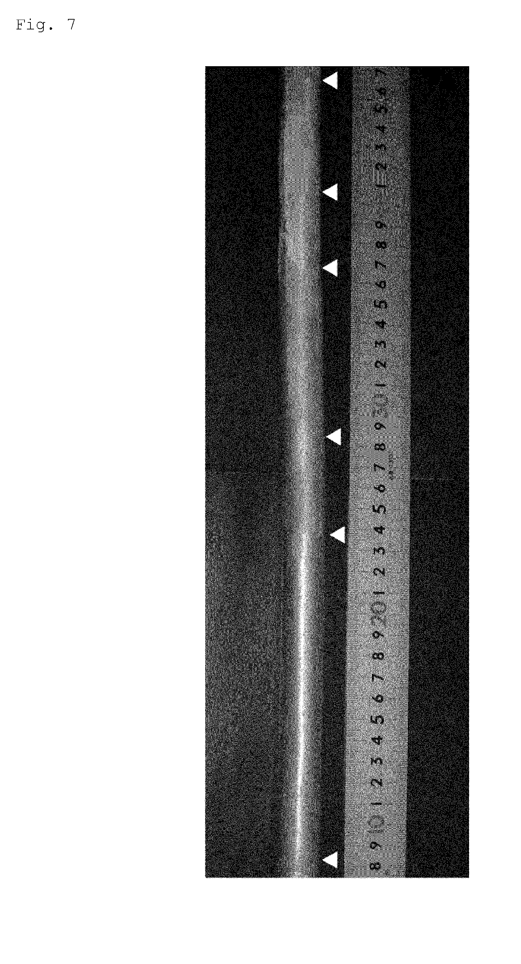

A picture of the appearance of Example 29 is shown in Fig. 7. The triangle symbols in the drawing represent the positions on the crystal particle boundary. It is understood from the drawing that many crystal particles each having a diameter larger than that of the rod material are present and the size thereof reaches 150 mm at the maximum. As mentioned above, huge crystal particles can be obtained from the Cu-Al-Mn-based shape-memory alloy by conducting a heat treatment even in a material having a large diameter.

[Test 4]

For a Cu-Al-Mn-based shape-memory alloy containing 8.1 mass% of Al and 10.7 mass% of Mn, rod materials having diameters of 4 mm and 8 mm, respectively (full length: 150 mm) were formed by high-frequency melting, hot forging and cold wire drawing. Furthermore, a cycle at 900°C for 15 minutes and at 600°C for 30 minutes was conducted twice and a heat treatment at 900°C for 15 minutes was finally conducted, and the sample was cooled in water and further subjected to an aging treatment at 200°C for 15 minutes to give Examples 30 and 31. The median value of the crystal particle sizes in Examples 30 and 31 is more than 8 mm.

On the other hand, Comparative Example 7 is a Cu-Al-Be-based shape-memory alloy, and the values in the table are based on Document 1 (Graesser EJ, Cozzarelli FA. Shape memory alloys as new material for aseismic isolation, Journal of Engineering Mechanics, ASCE 1991; 117: 2590-2608.) and Document 2 (Dolce M, Cardone D, Marnetto R. Implementation and testing of passive control devices on shape memory alloys, Earthquake Engineering and Structural Dynamics 2000; 29: 945-968.). Furthermore, Comparative Example 8 is an Ni-Ti shape-memory alloy, and the values in the table are based on Document 3 (Sepulveda A, Boroschek R, Herrera R, Moroni O, Sarrazin M, Steel beam-column connection using copper-based shape memory alloy dampers, Journal of Constructional Steel Research 2008, 64: 429-435.).

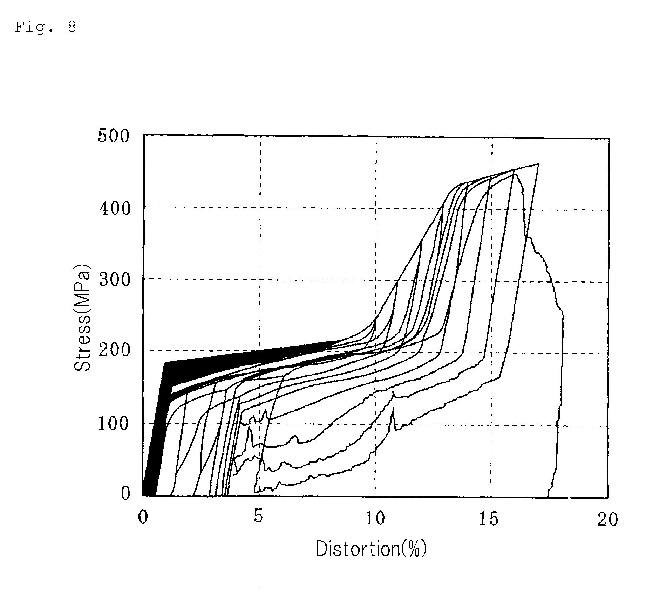

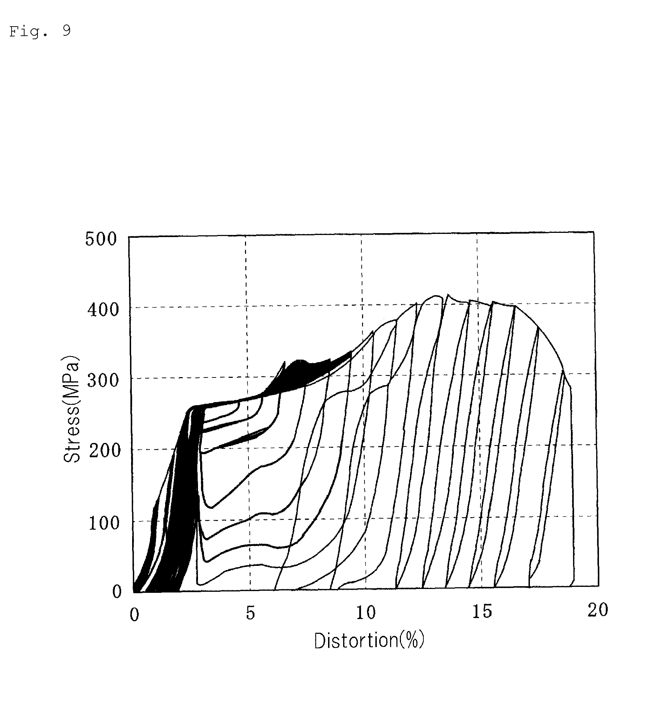

Quasi-static repetitive tensile tests were conducted on Examples 30 and 31 and Comparative Examples 7 and 8 under an interior environment. The stress-distortion curve of Example 30 is shown in Fig. 8, and the stress-distortion curve of Example 31 is shown in Fig. 9. Furthermore, the material constants of Examples 30 and 31 and Comparative Examples 7 and 8 are shown in Table 3. The restoration distortion in Table 3 is a value obtained by subtracting the residual distortion amount from the imparted distortion amount, and the yield stress is 0.2% offset yield strength.

The restoration distortion in Example 30 was 12%, the restoration distortion in Example 31 was 9%, and the break distortion was 18% in both Examples 30 and 31. The restoration distortion amounts in Examples 30 and 31 were much higher than that in Comparative Example 7 and were approximately equivalent to that in Comparative Example 8. Furthermore, the break distortions in Examples 30 and 31 were approximately twice as large as that in Comparative Example 7 and approximately half of that in Comparative Example 8.

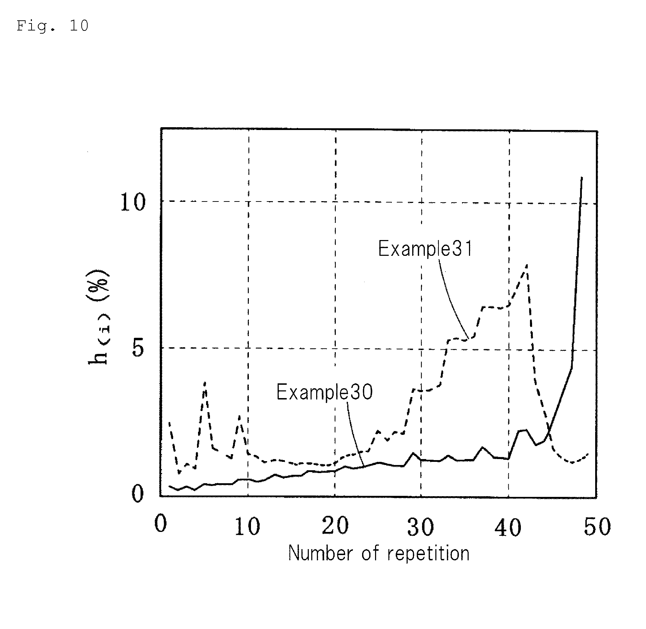

Furthermore, equivalent damping rates $h_{(i)}$ calculated from the stress-distortion curves of Examples 30 and 31 are shown in Fig. 10. An equivalent damping rate is defined by $h_{(i)}$ (%) $= \Delta W_{(i)}/2\pi\sigma_{(i)}\varepsilon_{(i)}$. Here, i is a number of repetition, $\varepsilon_{(i)}$ is an imparted distortion amount, $\sigma_{(i)}$ is a stress at a distortion $\varepsilon_{(i)}$, and $\Delta W_{(i)}$ is dissipation energy calculated from an in-loop surface area of a stress-distortion curve.

The equivalent damping rate $h_{(i)}$ was approximately around 2% in Example 30, whereas the equivalent damping rate $h_{(i)}$ depended on the imparted distortion amount and increased from 2% to 7% in accordance with the increase of the distortion amount in Example 31.

[Table 3]

| **Sample** Sample | Restoration Distortion | Break Distortion | Yield Stress | Modulus of Elasticity |
|---|---|---|---|---|
| Example 30 | **12%** | **18%** | **160-180 MPa** | **20 GPa** |
| Example 31 | **9%** | **18%** | **260 MPa** | **20 GPa** |
| Comparative Example 7 | **4.5%** | **8%** | **169 MPa** | **70 GPa** |
| Comparative Example 8 | **9%** | **40-50%** | **150-800 MPa** | **69-97 GPa** |

Reference Signs List

10: beam (concrete element), 11: concrete, 12: top reinforcement, 13: bottom reinforcement, 14: stirrup, 20: high strength bolt (joint bolt), 22: steel frame beam, 23: steel frame column, 24: bracket, 25: splice plate, 30: anchor bolt, 31: concrete base, 32: steel frame column, 33: base plate, 40: brace, 41, 42: columns, 43: upper beam, 44: lower beam, 50: angle brace

**Claims**

1. A copper-based alloy that has shape-memory properties and can be applied to various structures, **characterized in that**,
   the copper-based alloy consists of:

   7.8 to 8.8 mass% of Al;
   7.2 to 14.3 mass% of Mn, and
   a remainder made up by Cu and unavoidable impurities,

   and
   the copper-based alloy has a maximum crystal particle size of more than 8 mm.

2. A copper-based alloy in accordance with claim 1, further comprising one kind or two or more kinds of elements selected from the group consisting of Ni, Co, Fe, Ti, V, Cr, Si, Ge, Nb, Mo, W, Sn, Bi, Sb, Mg, P, Be, Zr, Zn, B, C, S, Ag and a misch metal by 0.001 to 5 mass% in total.

3. A concrete element having a main reinforcement comprising a copper-based alloy of claim 1 or 2.

4. A prestressed concrete element that comprises a PC tendon comprising a copper-based alloy of claim 1 or 2.

5. A reinforcing material comprising a copper-based alloy of claim 1 or 2, which is configured to be disposed inside of a masonry wall.

6. A splice plate comprising a copper-based alloy of claim 1 or 2, which is configured to be used in joining elements.

7. A joint bolt comprising a copper-based alloy of claim 1 or 2, which is configured to be used in joining elements.

8. An anchor bolt comprising a copper-based alloy of claim 1 or 2, which is configured to be buried in a concrete base.

9. A brace comprising a copper-based alloy of claim 1 or 2, which is configured to be disposed in a structure plane of a structure.

10. An angle brace comprising a copper-based alloy of claim 1 or 2, which is configured to support a beam.

Fig. 1

Fig. 2

Fig. 3

Fig. 4

(A)

(B)

Fig. 5

5mm

Fig. 6

200μm

Fig. 7

Fig. 8

Fig. 9

Fig. 10

## INTERNATIONAL SEARCH REPORT

| | International application No. |
|---|---|
| | PCT/JP2011/002966 |

A.   CLASSIFICATION OF SUBJECT MATTER
*C22C9/05*(2006.01)i, *C22C9/01*(2006.01)i, *C22F1/08*(2006.01)i, *E04B1/58*
(2006.01)i, *E04B2/02*(2006.01)i, *E04C5/02*(2006.01)i, *E04C5/08*(2006.01)i,
*E04C5/12*(2006.01)i, *C22F1/00*(2006.01)n
According to International Patent Classification (IPC) or to both national classification and IPC

B.   FIELDS SEARCHED

Minimum documentation searched (classification system followed by classification symbols)
C22C9/05, C22C9/01, C22F1/08, E04B1/58, E04B2/02, E04C5/02, E04C5/08,
E04C5/12, C22F1/00

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y | JP 7-62472 A  (Kiyohito ISHIDA),<br>07 March 1995 (07.03.1995),<br>paragraphs [0007], [0020]<br>(Family: none) | 1,2<br>1-10 |
| X<br>Y | JP 2000-169920 A  (Kiyohito ISHIDA),<br>20 June 2000 (20.06.2000),<br>paragraphs [0010], [0028] to [0037], [0055],<br>[0056]<br>(Family: none) | 1,2<br>1-10 |
| Y | JP 2001-20026 A  (Kiyohito ISHIDA),<br>23 January 2001 (23.01.2001),<br>paragraph [0006]<br>& US 6406566 B1 | 1-10 |

☒   Further documents are listed in the continuation of Box C.          ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 August, 2011 (10.08.11) | 23 August, 2011 (23.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/002966

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 2009-52097 A  (Keiichi ARAKI),<br>12 March 2009 (12.03.2009),<br>claims<br>(Family: none) | 3-10<br>1,2 |
| Y<br>A | JP 2008-138469 A  (Takenaka Corp.),<br>19 June 2008 (19.06.2008),<br>paragraph [0001]<br>(Family: none) | 3-10<br>1,2 |
| Y<br>A | JP 2006-257765 A  (Nippon Steel Corp.),<br>28 September 2006 (28.09.2006),<br>claims<br>(Family: none) | 3-10<br>1,2 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3335224 B
- JP 2009052097 A
- JP 3300684 B

**Non-patent literature cited in the description**

- **SONG G, MA N ; LI H-N.** Applications of shape memory alloys in civil structures. *Engineering Structures,* 2006, vol. 28, 1266-1274
- **GRAESSER EJ ; COZZARELLI FA.** Shape memory alloys as new material for aseismic isolation. *Journal of Engineering Mechanics,* 1991, vol. 117, 2590-2608
- **DOLCE M ; CARDONE D ; MARNETTO R.** Implementation and testing of passive control devices on shape memory alloys. *Earthquake Engineering and Structural Dynamics,* 2000, vol. 29, 945-968
- **SEPULVEDA A ; BOROSCHEK R ; HERRERA R ; MORONI O ; SARRAZIN M.** Steel beam-column connection using copper-based shape memory alloy dampers. *Journal of Constructional Steel Research,* 2008, vol. 64, 429-435